# FASCICULE DE BREVET EUROPEEN

(11) **EP 2 537 702 B1**
(45) Date de publication et mention de la délivrance du brevet: **27.11.2019**
(21) Numéro de dépôt: 12305641.8
(22) Date de dépôt: 06.06.2012
(51) Int. Cl.: H02J 7/02, H02P 6/08, H02P 3/02

(54) **Procédé de configuration d'un stator de machine électrique tournante**
Konfigurationsverfahren eines Stators einer rotierenden elektrischen Maschine
Configuration of a stator of a rotating electric machine

(30) Priorité: 24.06.2011 FR 1155602
(43) Date de publication de la demande: 26.12.2012
(73) Titulaire: Valeo Siemens eAutomotive France SAS, 95800 Cergy (FR)
(72) Inventeur: Bruyere, Antoine, 78700 EVEQUEMONT (FR)
(74) Mandataire: Argyma

(56) Documents cités:
- WO-A1-97/02649
- WO-A1-2010/057893

## Description

La présente invention a pour objet un procédé de configuration d'un stator de machine électrique tournante, un procédé de charge d'une batterie d'un véhicule électrique comprenant une machine électrique tournante ayant un stator ainsi configuré et le système formé par un tel stator et le dispositif d'alimentation électrique auquel il est connecté.

L'invention s'applique à tout type de machine électrique tournante, notamment mais non exclusivement aux machines synchrones ou asynchrones.

Les machines électriques tournantes comprennent un stator ayant une carcasse sur laquelle sont bobinés des conducteurs électriques formant les bobines du stator. Ces machines électriques peuvent être utilisées pour la propulsion de véhicules hybrides ou électriques. De tels véhicules comportent alors une batterie servant à alimenter par l'intermédiaire d'un onduleur le moteur électrique pour faire tourner celui-ci.

Lors de la charge de la batterie, celle-ci peut être connectée à un dispositif d'alimentation électrique, tel qu'un réseau de distribution d'énergie. Il est connu, par exemple de la demande WO 2010/057892, d'utiliser lors de la charge de la batterie du véhicule l'onduleur et les bobines du stator, de sorte que l'on conserve le même circuit électrique lorsque la batterie alimente le moteur et lorsque la batterie est en cours de recharge.

L'ordre selon lequel les bobines sont successivement disposées sur la carcasse d'un stator lorsque l'on se déplace autour de l'axe de ce stator peut ne pas respecter l'ordre temporel des courants parcourant chaque bobine. Cet ordre temporel des courants est donné par la valeur du déphasage entre le courant parcourant une bobine de référence, auquel on attribue arbitrairement une phase nulle, et le courant parcourant chacune des autres bobines du stator.

Cet ordre temporel des courants sera par la suite appelé « ordre des courants ». A titre d'exemple, dans le cas de quatre courants régulièrement déphasés, les courants successifs sont ordonnés lorsqu'ils se succèdent sur le pourtour du stator selon l'ordre suivant :
- courant de phase nulle,
- courant déphasé par rapport au courant de phase nulle de 90°,
- courant déphasé par rapport au courant de phase nulle de 180° et,
- courant déphasé par rapport au courant de phase nulle de 270°.

Or, la façon dont les bobines disposées sur la carcasse du stator sont connectées à un dispositif d'alimentation électrique influence le comportement de la machine électrique tournante, et notamment le contrôle de celle-ci.

La demande WO 97/02649 divulgue une machine à reluctance variable apte à être alimentée par deux sources d'énergies. Ce document concerne une méthode de commande d'une machine électrique tournante pouvant être entraînée en mouvement en étant alimentée par une batterie et apte, dans un mode de charge, à recharger ladite batterie. Il n'est aucunement divulgué dans cette demande dans quel ordre les bobines du stator de cette machine sont reliées aux phases du réseau électrique.

Il existe un besoin pour configurer un stator de machine électrique tournante connecté à un dispositif d'alimentation électrique de manière à améliorer le fonctionnement de la machine, notamment pour rendre plus simple le contrôle des courants dans les bobines du stator de cette machine, ce qui peut s'avérer utile lorsque la machine électrique est alimentée par une batterie et que l'on souhaite recharger cette dernière.

L'invention a pour but de répondre à ce besoin et elle y parvient, selon l'un de ses aspects, à l'aide d'un procédé conforme à la revendication 1.

Avec un tel stator, l'ordre des bobines lorsque l'on se déplace autour de l'axe du stator est le même que l'ordre des courants propres à chaque bobine et parcourant ces dernières ou est l'ordre inverse de l'ordre des courants.

Au sens de l'invention, un courant « propre à une bobine » est un courant ne circulant que dans la bobine en question et non dans les autres bobines du stator.

Ce problème n'était pas perceptible dans le cas où l'on utilise une machine électrique tournante à trois bobines et alimentée en triphasé. En effet, dans ce cas, l'ordre des bobines autour de l'axe du stator correspond nécessairement à l'ordre des courants ou à l'ordre inverse des courants puisqu'à partir de la bobine de référence parcourue par un courant de phase nulle, on trouve successivement :
- soit la bobine ayant un courant en retard de 2Π/3 et la bobine dont le courant est en retard de 4Π/3, auquel cas l'ordre des bobines est le même que l'ordre des courants;
- soit la bobine ayant un courant en avance de 2II/3 puis celle dont le courant est en avance de 4II/3, auquel cas l'ordre des bobines est l'inverse de l'ordre des courants.

Ainsi, l'invention permet que les bobines et les courants soient ordonnés lorsque l'on se déplace autour de l'axe du stator, dès lors que quatre bobines ou plus sont disposées sur la carcasse du stator.

Le déphasage varie de façon strictement monotone, c'est-à-dire que déphasage entre le courant parcourant la bobine de référence et le courant parcourant une autre bobine et propre à cette dernière est strictement croissant ou décroissant lorsque l'on se déplace autour de l'axe du stator à partir de la bobine de référence. Par la suite, les valeurs d'angles électriques ou mécaniques doivent être comprises à 2Π près.

Les bobines peuvent être réparties de façon uniforme autour de l'axe du stator et le déphasage peut croître ou décroître de façon régulière entre les bobines successives. « Bobines réparties de manière uniforme » signifie que la machine est régulièrement construite. Dans un tel cas, le décalage angulaire est sensiblement constant sur le pourtour du stator.

Au sens de l'invention, le décalage angulaire entre deux bobines successives du stator peut être mesuré dans un plan perpendiculaire à l'axe du stator, entre les plans médians des bobines successives. Lorsque le stator est à bobinage sur dent, le décalage angulaire entre deux bobines successives peut être mesuré entre le plan médian de la dent autour de laquelle une bobine est bobinée et le plan médian de la dent autour de laquelle la bobine successive est bobinée.

Deux bobines successives peuvent être décalées angulairement d'un angle mécanique sensiblement égal à 2.k.Π/N et lesdites deux bobines successives sont alimentées par des courants déphasés entre eux d'un angle électrique sensiblement égal à 2.k.Π/N. k est un entier relatif, étant par exemple égal à un.

Une telle disposition angulaire des bobines et des courants les parcourant peut permettre de réaliser un contrôle efficace des performances de la machine.

Les courants délivrés par le dispositif d'alimentation peuvent tous avoir la même amplitude.

L'étape de bobinage peut avoir été effectuée préalablement à la mise en œuvre du procédé ou faire partie du procédé.

Le système d'alimentation électrique peut délivrer un courant polyphasé.

La machine électrique tournante est par exemple une machine synchrone, notamment une machine synchrone à aimants permanents.

Le stator peut être connecté au dispositif d'alimentation électrique, qui est par exemple un réseau électrique, sans l'intermédiaire d'un convertisseur de tension, notamment d'un redresseur. Le réseau électrique est par exemple d'un réseau industriel géré par un fournisseur d'énergie ou encore d'un réseau plus local, par exemple d'une éolienne ou d'un groupe électrogène.

Selon un exemple de mise en œuvre de l'invention, le système d'alimentation électrique délivre un courant triphasé et il est connecté aux bobines du stator de manière à ce que chaque bobine ait une entrée en courant depuis le dispositif d'alimentation commune avec une autre bobine, ladite autre bobine formant une bobine complémentaire de ladite bobine. Chaque bobine complémentaire d'une bobine sera par la suite également appelée « bobine duale » de ladite bobine. L'emploi d'une bobine duale peut permettre que les courants circulant dans un couple « bobine/ bobine duale » soient équilibrés et que l'onde de force magnétomotrice dans l'entrefer soit statique et ne crée pas de champ tournant, ce qui peut être utile dans des applications qui seront mentionnées ci-après.

Le bobinage et la connexion peuvent être tels que ladite bobine et ladite bobine complémentaire sont diamétralement opposées par rapport à l'axe du stator et sont parcourues par des courants déphasés d'un angle électrique égal à Π. On peut ainsi obtenir pour chaque bobine un couple « bobine/ bobine complémentaire ou duale » où lesdites bobines du couple sont diamétralement opposées et parcourues par des courants en opposition de phase. Lorsqu'un tel stator est associé à un rotor dont les pôles diamétralement opposés ont la même polarité (étant par exemple deux pôles Nord ou deux pôles Sud), chaque bobine d'un couple « bobine/ bobine duale » donné voit strictement le même champ magnétique rotorique et produit alors un champ magnétique en opposition l'un par rapport à l'autre. Ainsi, l'effort produit par une bobine lorsqu'elle est plongée dans le champ magnétique rotorique et lorsqu'elle est parcourue par un courant délivré par le dispositif d'alimentation est compensé par l'effort produit par sa bobine duale plongée dans le même champ magnétique rotorique et parcourue par un courant en opposition de phase, de sorte que le rotor n'est que peu en mouvement, voire immobile.

En variante, le stator peut être associé à un rotor dont les pôles diamétralement opposés ont des polarités opposées. Chaque bobine d'un couple voit alors un champ magnétique rotorique en opposition de phase, et ces bobines étant elles-mêmes parcourues par des courants en opposition de phase, elles vont générer des efforts s'additionnant et permettant la mise en rotation du rotor. Une bobine peut former une première partie de l'enroulement d'une phase du stator tandis que la bobine complémentaire ou duale de ladite bobine forme une deuxième partie distincte de la première de l'enroulement de ladite phase. L'enroulement de chaque phase du stator peut ainsi être composé par un couple « bobine/ bobine duale ».

L'entrée en courant de l'enroulement d'une phase du stator, qui constitue l'entrée commune en courant d'un couple « bobine/ bobine duale » est par exemple disposée sensiblement au point milieu dudit enroulement, de sorte que le courant circulant dans une bobine ait sensiblement la même amplitude que le courant circulant dans la bobine complémentaire ou duale de ladite bobine.

Le stator peut être à bobinage concentré ou réparti.

Le rotor peut être à pôles lisses ou à pôles saillants.

Le stator et le rotor peuvent comporter ou non le même nombre de pôles.

Le dispositif d'alimentation électrique peut délivrer un courant alternatif. Ce courant peut avoir une fréquence de 50Hz ou 60Hz, par exemple.

Le nombre de pôles du rotor est par exemple compris entre 2 et 20.

L'invention a encore pour objet, selon un autre de ses aspects, un procédé de charge d'une batterie depuis un dispositif d'alimentation électrique en utilisant une machine électrique tournante, procédé dans lequel :
- on configure le stator de la machine électrique tournante en appliquant le procédé décrit ci-dessus et,
- on charge la batterie en utilisant les bobines du stator, les courants ayant circulé dans celles-ci étant redressés avant d'alimenter ensuite la batterie.

Un tel procédé s'applique notamment dans le domaine des véhicules électriques, notamment des automobiles, dans lesquels la batterie peut alimenter le moteur via un onduleur lorsque celui-ci tourne et être rechargée lorsque le moteur est à l'arrêt. D'autres applications de ce procédé sont néanmoins possibles telles que pour la génération d'énergie éolienne ou hydraulique.

Au sens de l'invention, «batterie » doit être compris comme englobant une ou plusieurs batteries qui soient aussi bien les batteries désignées de cette manière dans le commerce que les autres unités de stockage d'énergie, rechargeables ou non, telles que les super-condensateurs par exemple. Il peut s'agir d'une ou plusieurs batteries lithium-ion ou d'accumulateurs, par exemple au plomb ou de type Ni/Cd.

Selon un tel procédé, par exemple décrit dans la demande WO 2010/057893, on peut charger la batterie du véhicule en utilisant les éléments du moteur et de l'onduleur tels que les bobines du stator du moteur et les commutateurs de l'onduleur.

La machine électrique tournante peut en particulier comporter un stator alimenté par un dispositif d'alimentation délivrant un courant triphasé, le dispositif d'alimentation étant relié aux bobines du stator de manière à ce que chaque bobine ait une entrée en courant depuis le dispositif d'alimentation commune avec une autre bobine de la carcasse, ladite autre bobine formant une bobine complémentaire de ladite bobine, ladite bobine et ladite bobine duale étant diamétralement opposées par rapport à l'axe du stator et parcourues par des courants déphasés d'un angle électrique égal à Π. Les bobines d'un couple « bobine/ bobine duale » peuvent composer l'enroulement d'une phase du stator et l'entrée en courant de cet enroulement peut être disposée sensiblement au point milieu dudit enroulement.

Un onduleur comportant des commutateurs peut être disposé entre le stator et la batterie. Cet onduleur comporte par exemple des ponts en H et chaque bobine peut présenter une sortie connectée entre deux interrupteurs d'un bras d'un pont en H.

La machine électrique tournante peut comporter un rotor configuré de manière à ce que le rotor soit immobile lorsque les bobines du stator sont alimentées en courant pour recharger la batterie. Cette immobilité peut être obtenue en choisissant un rotor à pôles diamétralement opposés de même polarité, de manière à ce que chaque couple « bobine/ bobine duale » voit un même champ magnétique rotorique et génère des efforts se compensant, étant donné qu'ils sont parcourus par des courants en opposition de phase. Avec une telle machine électrique, on peut utiliser les enroulements du stator lors de la charge de la batterie en réduisant autant que possible les mouvements du rotor, de manière à obtenir un chargeur statique.

Cette application du procédé selon l'invention peut permettre d'éviter d'avoir à découpler le rotor de l'arbre de la machine lors de la charge et/ou d'avoir à appliquer des freins sur le moteur lors de la charge de la batterie.

En variante, la machine électrique tournante peut comporter un rotor configuré de manière à ce que le rotor tourne lorsque les bobines du stator sont alimentées en courant lors de la charge.

L'invention a encore pour objet, selon un autre de ses aspects, un système, comprenant :
- un stator de machine électrique tournante, comportant une carcasse et des conducteurs électriques bobinés sur la carcasse de manière à former N bobines, N étant supérieur ou égal à quatre, et
- un dispositif d'alimentation électrique délivrant à chaque bobine du stator un courant électrique propre,
la connexion du stator au dispositif d'alimentation électrique étant effectuée de telle sorte que lorsque l'on se déplace autour de l'axe du stator à partir d'une bobine de référence, le déphasage entre le courant parcourant ladite bobine de référence et le courant propre à chacune des autres bobines varie de façon strictement monotone au fur et à mesure du déplacement à partir de ladite bobine de référence.

Lorsque l'on se déplace autour de l'axe du stator, deux bobines successives peuvent être décalées angulairement d'un angle mécanique sensiblement égal à 2.k.Π/N et lesdites bobines successives peuvent être connectées au réseau de manière à être respectivement alimentées par des courants déphasés entre eux d'un angle électrique sensiblement égal à 2.k.Π/N. k est un entier relatif, par exemple égal à un.

Un tel système peut permettre d'obtenir les avantages mentionnés ci-dessus et peut être associé à tout ou partie des caractéristiques mentionnées ci-dessus en rapport avec les procédés décrits.

L'invention pourra être mieux comprise à la lecture qui va suivre d'exemples non limitatifs de mise en œuvre de celle-ci et à l'examen du dessin annexé sur lequel,
- la figure 1 représente de façon schématique une machine électrique tournante ayant un stator configuré conformément au procédé selon l'invention,
- les figures 2 et 3 représentent un sous-ensemble d'un véhicule électrique dans lequel un procédé de charge d'une batterie à l'aide d'un stator configuré selon l'invention peut être mis en œuvre et,
- la figure 4 est un diagramme montrant les différentes possibilités de connecter les bobines du stator du moteur représenté aux figures 2 et 3 à un dispositif d'alimentation électrique.

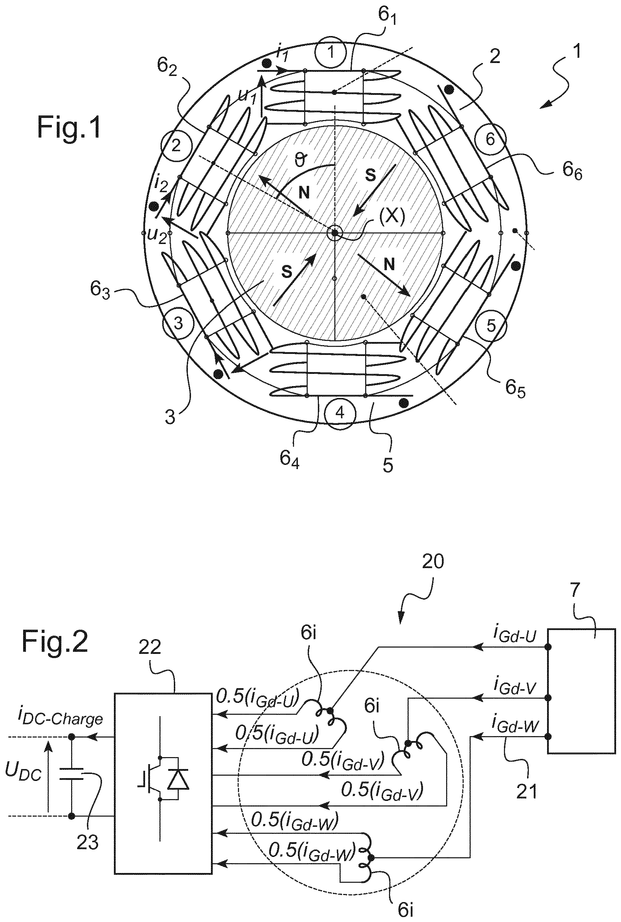

On a représenté à la figure 1 une machine électrique tournante 1 dont le stator 2 est configuré conformément au procédé selon l'invention. Cette machine électrique tournante 1 est par exemple une machine synchrone ou asynchrone et peut présenter une puissance nominale comprise entre 10W et 10 MW, notamment comprise entre 100W et 200kW.

La machine 2 comprend un rotor 3 qui est dans l'exemple considéré à quatre pôles. Dans le cas d'un rotor de machine synchrone, le rotor 3 peut comprendre des aimants permanents.

Le stator 2 comporte une carcasse 5 sur laquelle sont disposées N bobines 6ⱼ, N étant supérieur ou égal à quatre. Dans l'exemple considéré, N est égal à six. La carcasse 5 s'étend autour d'un axe X appelé par la suite « axe du stator ». Dans l'exemple qui va être décrit, le stator 2 est alimenté en courant par un dispositif d'alimentation électrique 7. Le dispositif d'alimentation 7 peut être tout réseau électrique.

Le dispositif d'alimentation 7 délivre dans l'exemple considéré au stator 2 un courant triphasé.

Dans les exemples représentés, les bobines 6ⱼ du stator 2 sont bobinées sur dent mais l'invention s'applique également à un stator avec bobinage réparti.

En outre, les exemples décrits concernent une machine à flux radial et à rotor interne mais l'invention peut également s'appliquer à une machine à flux axial et/ou à rotor externe.

Comme on peut le voir sur la figure 1, les bobines 6ⱼ peuvent être réparties de façon uniforme sur le pourtour de l'axe X, c'est-à-dire que l'écart angulaire θⱼⱼ₊₁ entre les bobines 6ⱼ et 6ⱼ₊₁ est sensiblement constant sur le pourtour du stator, les bobines 6ⱼ et 6_{J+1} désignant deux bobines successives lorsque l'on se déplace autour de l'axe X. On adoptera dans un tel cas de répartition uniforme des bobines 6ⱼ la notation θ.

Dans l'exemple de la figure 1, l'écart angulaire θ vaut 2Π/6. On considère comme bobine de référence la bobine 6₁. La phase du courant i₁ parcourant cette dernière et propre à celle-ci est alors arbitrairement fixée comme nulle Le stator 2 de la machine électrique 1 est connecté au dispositif d'alimentation 7 de manière à ce qu'en se déplaçant à partir de la bobine 6₁ autour de l'axe X, on trouve successivement :
- la bobine 6₂, qui est décalée par rapport à la bobine 6₁ de 2Π/6 est parcourue par un courant i₂ de +2Π/6, respectivement de -2Π/6, par rapport au courant i₁,
- la bobine 6₃, qui est décalée par rapport à la bobine 6₂ de 2Π/6 est parcourue par un courant i₃ déphasé de +4Π/6, respectivement de -4Π/6, par rapport au courant i₁,
- la bobine 6₄, qui est décalée par rapport à la bobine 6₃ de 2Π/6, c'est-à-dire de II par rapport à la bobine 6₁, est parcourue par un courant i₄ déphasé de II par rapport au courant i₁,
- la bobine 6₅, qui est décalée par rapport à la bobine 6₄ de 2Π/6 est parcourue par un courant i₅ déphasé de +8Π/6, respectivement de -8Π/6, par rapport au courant i₁, et
- la bobine 6₆, qui est décalée par rapport à la bobine 6₅ de 2Π/6 est parcourue par un courant i₆ déphasé de +10Π/6, respectivement de -10Π/6, par rapport au courant i₁.

On constate ainsi que dans l'exemple de la figure 1, le déphasage entre le courant i₁
et les courants iⱼ varie de façon strictement monotone (modulo 2Π) lorsque l'ordre j des bobines varie de 1 à 6. Des bobines diamétralement opposées par rapport à l'axe X sont parcourues par des courants en opposition de phase dans l'exemple considéré. Toujours dans l'exemple considéré, les courants i₁ à i₆ ont la même amplitude. Ces bobines diamétralement opposées sont disposées dans l'exemple de la figure 1 face à des pôles du rotor 3 de même polarité.

On va maintenant décrire, en référence aux figues 2 à 4, un exemple d'utilisation d'un stator configuré selon l'invention.

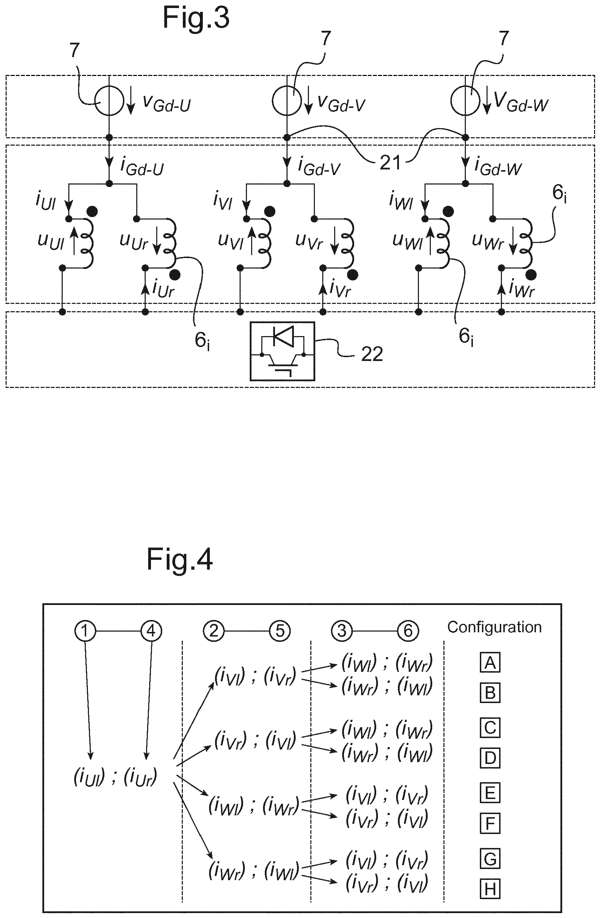

La machine électrique tournante 1 peut être intégrée à un sous-ensemble 20 d'un véhicule électrique. Ce sous-ensemble 20 comprend dans l'exemple des figures 2 et 3 un connecteur 21 configuré pour être relié au dispositif d'alimentation électrique 7, un convertisseur 22 et un condensateur 23 monté en parallèle aux bornes d'une batterie non représentée. Le cas échéant, un convertisseur DC/DC peut être disposé entre le convertisseur 22 et la batterie.

Le convertisseur 22 comporte des commutateurs qui peuvent comprendre chacun un transistor de puissance aux bornes duquel est montée une diode en parallèle. Les commutateurs sont par exemple disposés selon des ponts en H. Dans le cas d'une alimentation en courant triphasé avec un stator 2 triphasé, le convertisseur comporte par exemple trois ponts en H. Chaque pont en H peut alors comporter deux bras ayant chacun deux interrupteurs tels que décrits ci-dessus et chaque borne d'un enroulement formant une phase du stator peut être connectée entre deux interrupteurs d'un bras d'un pont.

Le convertisseur 22 est configuré de manière à ce que :
- lorsque la machine électrique tournante 1 entraîne le véhicule, le convertisseur joue le rôle d'onduleur pour alimenter la machine 1 depuis la batterie et
- lorsque l'on charge la batterie, par exemple depuis le dispositif d'alimentation électrique 7, le convertisseur 22 joue le rôle de redresseur pour charger la batterie en courant continu.

Dans les deux modes de fonctionnement ci-dessus du convertisseur 22, ce dernier détermine la forme des courants iⱼ selon une stratégie prédéterminée.

Lorsque le convertisseur 22 comporte des ponts en H, ces derniers peuvent être commandés selon l'enseignement de la demande WO 2010/057892 déjà citée.

Le sous-ensemble 20 des figures 2 et 3 utilise les enroulements du stator 2 lors de la charge de la batterie et les commutateurs du convertisseur 22 mais, dans d'autres exemples, un chargeur spécifique pourrait être prévu.

Comme on peut le voir sur les figures 2 et 3, six bobines 6ⱼ sont disposées sur la carcasse 5 du stator. Chaque bobine possède une entrée en courant d'alimentation par le dispositif 7 commune à une autre bobine. Ces deux bobines ayant une entrée commune en courant forment dans l'exemple considéré l'enroulement correspondant à une phase électrique du stator 2. Dans l'exemple de la figure 2, l'enroulement de chaque phase du stator est alimenté en son point milieu, c'est-à-dire que les deux bobines ayant une entrée commune en courant ont le même nombre de spires et que les courants iᵤ, iᵥ et i_{w} alimentant respectivement les phases du stator reliées aux phases U, V et W du dispositif d'alimentation 7 sont divisés en deux à leur entrée dans le stator 2, une moitié i_{U1}, i_{V1} ou i_{W1} de ce courant circulant dans une bobine tandis que l'autre moitié i_{Ur}, i_{Vr} et i_{Wr} circule dans une autre bobine. Ces bobines ayant une entrée en courant commune en courant seront ensuite appelées « bobine » et « bobine complémentaire ou duale » et ces deux bobines forment un couple « bobine/ bobine duale ».

Dans l'exemple décrit, les bornes de l'enroulement formant chaque phase du stator peuvent être respectivement disposées entre deux commutateurs d'un bras d'un pont en H tandis que le point milieu de cet enroulement est connecté au dispositif d'alimentation 7. Le schéma électrique du sous-ensemble 20 du véhicule électrique est par exemple le même que celui de la Figure 5 de la demande WO 2010/057892 qui est incorporé à la présente demande par référence.

Comme on peut le voir sur la figure 3, les bobines d'un couple peuvent être parcourues par des courants de même intensité mais en opposition de phase.

On va maintenant expliquer en référence à la figure 4 de quelle façon les bobines du stator 2 peuvent être connectées au dispositif d'alimentation 7.

Comme on peut le voir sur cette figure 4, il existe huit façons de connecter les six bobines 6ⱼ disposées sur la carcasse du stator au dispositif 7 lorsque l'on cherche à ce que les bobines formant un couple « bobine/ bobine duale » qui sont parcourues par des courants en opposition de phase soient diamétralement opposées par rapport à l'axe X.

Sans cette dernière condition, dès lors que l'on a connecté une des bobines au dispositif d'alimentation 7, il existe 120 façons différentes de connecter les autres bobines 6ⱼ au dispositif d'alimentation 7 Selon l'invention, on cherche à ce que l'ordre des courants iⱼ dans les bobines 6ⱼ varie de façon strictement monotone lorsque l'on se déplace autour de l'axe X du stator.

Comme on peut le voir, les courants i_{U1}, i_{V1} et i_{W1} sont déphasés entre eux de 2Π/3, tout comme sont déphasés entre eux de la même valeur d'angle les courants i_{Ur}, i_{Vr} et i_{Wr}. Par ailleurs, le déphasage entre les courants l_{U1} et i_{Ur}, respectivement entre les courants i_{V1} et i_{Vr} respectivement entre les courants i_{W1} et i_{Wr}, est égal à II.

Si l'on relie les bobines 6ⱼ du stator au dispositif d'alimentation 7 selon la configuration « C » de la figure 4, en considérant que la bobine 6₁, qui est reliée de manière à être alimentée par le courant i_{U1}, est la bobine de référence pour le déphasage du courant, on trouve successivement les bobines et les courants suivants lorsque l'on se déplace autour de l'axe X à partir de la bobine de référence 6₁ :
- la bobine 6₂ alimentée par le courant i_{Vr} déphasé de 2Π/6 par rapport à i_{U1},
- la bobine 6₃ alimentée par le courant i_{W1} déphasé de 4Π/6 par rapport à i_{U1},
- bobine 6₄ alimentée par le courant i_{Ur} déphasé de II par rapport à i_{U1}
- bobine 6₅ alimentée par le courant i_{V1} déphasé de 8Π/6 par rapport à i_{U1}, et
- bobine 6₆ alimentée par le courant i_{Wr} déphasé de 10Π/6 par rapport à i_{U1}.

On obtient ainsi des bobines 6ⱼ successives angulairement décalées de 2Π/6 et telles que le déphasage entre le courant parcourant la bobine de référence et le courant parcourant chacune des autres bobines et propre à celle-ci varie de façon strictement monotone et, dans l'exemple décrit de façon régulière, lorsque l'on se déplace autour de l'axe X.

On constate en observant la figure 4 que la configuration « G » permet également d'obtenir la relation souhaitée entre disposition des bobines et variation du déphasage des courants les parcourant.

Lorsque le stator selon la configuration « C » ou « G » est associé à un rotor 3 de machine électrique tournante dont les pôles diamétralement opposés sont de même polarité, les efforts générés dans les bobines d'un couple qui sont, selon ces configurations, parcourues par des courants en opposition de phase et qui sont diamétralement opposées par rapport à l'axe du stator se compensent, de sorte que bien que le stator soit électriquement alimenté, le rotor ne tourne pas. On peut ainsi procéder à la charge de la batterie en utilisant les composants du sous-ensemble 20 sans qu'il soit nécessaire d'empêcher les mouvements du rotor.

Le contrôle des courants circulant dans les enroulements du stator d'une telle machine peut être facilité. Avec un tel stator, on peut par exemple employer des outils mathématiques tels que les transformées de Park ou de Concordia ou la transformée de Park généralisée lorsque l'on travaille sur les équations matricielles reliant le courant parcourant chaque bobine et propre à celle-ci et la tension aux bornes de chaque bobine.

La matrice des inductances obtenues à l'aide de ces équations peut notamment présenter une bonne circularité qui est propice à l'emploi de ces transformées mathématiques. Dans le cas d'une alimentation triphasée, l'emploi de tels outils mathématiques peut rendre plus simple la mise en œuvre d'une commande assurant la charge de la batterie en courant continu avec en entrée de l'onduleur et en sortie du moteur du sous-ensemble 20 trois courants sinusoïdaux en phase avec les tensions délivrées par le dispositif d'alimentation électrique 7 (cette commande est encore appelée «fonctionnement en Power Factor Corrector »).

L'invention n'est pas limitée aux exemples qui viennent d'être décrits, mais par les revendications 1 - 12. L'invention peut par exemple s'appliquer avec un dispositif d'alimentation électrique 7 comportant un nombre quelconque de phases et avec une machine électrique tournante ayant un nombre quelconque de phases.

L'expression « comportant un » doit être comprise comme signifiant « comportant au moins un », sauf lorsque le contraire est spécifié.

## Revendications

1. Procédé pour charger une batterie à partir d'un dispositif d'alimentation électrique (7) avec l'aide d'une machine électrique tournante (1), ledit procédé comprenant les étapes suivantes :
- disposer d'un stator (2) de la machine électrique tournante ayant une carcasse (5) sur laquelle des conducteurs électriques sont bobinés de manière à former N bobines (6ⱼ), N étant supérieur ou égal à quatre et,
- connecter électriquement les bobines (6ⱼ) au dispositif d'alimentation électrique (7) de manière à ce que chaque bobine (6ⱼ) soit parcourue par un courant électrique propre (iⱼ) délivré par le dispositif d'alimentation électrique (7) et présente une entrée en courant issu du dispositif d'alimentation électrique (7) qui est commune avec une autre bobine (6ⱼ) du stator (2), ladite autre bobine formant une bobine complémentaire de ladite bobine, le bobinage et la connexion des bobines (6ⱼ) au dispositif d'alimentation électrique (7) étant tels que ladite bobine et ladite bobine complémentaire sont diamétralement opposées par rapport à un axe du stator et sont parcourues par des courants propres (iⱼ) respectifs déphasés d'un angle égal à II, et la connexion du stator (2) au dispositif d'alimentation électrique (7) étant effectuée de telle sorte que lorsque l'on se déplace autour de l'axe (X) du stator (2) à partir d'une bobine de référence (6₁), le déphasage entre le courant (i₁) parcourant ladite bobine de référence et le courant (iⱼ) propre à chacune des autres bobines (6ⱼ) varie de façon strictement monotone au fur et à mesure du déplacement à partir de ladite bobine de référence (6₁), et
- charger la batterie en utilisant les bobines (6ⱼ) du stator, les courants (iⱼ) ayant circulé dans celles-ci étant redressés avant d'alimenter ensuite la batterie.

2. Procédé selon la revendication 1, dans lequel les bobines (6ⱼ) sont réparties de façon uniforme autour de l'axe (X) du stator et dans lequel le déphasage des courants (iⱼ) varie de façon régulière entre les bobines successives (6ⱼ).

3. Procédé selon la revendication 2, dans lequel deux bobines successives (6ⱼ) sont décalées angulairement d'un angle mécanique (θ) sensiblement égal à 2.k.Π/N et lesdites deux bobines successives (6ⱼ) sont alimentées par des courants (iⱼ) déphasés entre eux d'un angle électrique sensiblement égal à 2.k.Π/N, k étant un entier relatif.

4. Procédé selon l'une quelconque des revendications 1 à 3, dans lequel les courants (iⱼ) délivrés par le dispositif d'alimentation (7) ont tous la même amplitude.

5. Procédé selon l'une des revendications précédentes, dans lequel le dispositif d'alimentation électrique délivre un courant triphasé.

6. Procédé selon l'une des revendications précédentes, dans lequel une bobine (6ⱼ) forme une première partie de l'enroulement d'une phase du stator tandis que la bobine complémentaire (6ⱼ) de ladite bobine forme une deuxième partie distincte de la première partie de l'enroulement de ladite phase.

7. Procédé selon la revendication 6, dans lequel l'entrée en courant de l'enroulement d'une phase du stator est disposée sensiblement au point milieu dudit enroulement.

8. Procédé selon l'une quelconque des revendications précédentes, dans lequel la machine électrique tournante est une machine synchrone.

9. Procédé selon l'une quelconque des revendications précédentes, dans lequel le dispositif d'alimentation électrique est un réseau électrique que l'on connecte aux bobines (6ⱼ) du stator sans convertisseur de tension.

10. Procédé de charge selon l'une des revendications précédentes, dans lequel la machine électrique tournante (1) comporte un rotor (3) configuré de manière à ce que le rotor (3) soit immobile lorsque les bobines (6ⱼ) du stator (2) sont alimentées en courant pour recharger la batterie.

11. Système pour charger une batterie, comprenant :
- un stator (2) de machine électrique tournante (1), comportant une carcasse (5) et des conducteurs électriques bobinés sur la carcasse de manière à former N bobines (6ⱼ), N étant supérieur ou égal à quatre, et
- un dispositif d'alimentation électrique (7) délivrant à chaque bobine (6ⱼ) un courant électrique propre (iⱼ) et une entrée en courant issu du dispositif d'alimentation électrique (7) qui est commune avec une autre bobine (6ⱼ) du stator (2), ladite autre bobine formant une bobine complémentaire de ladite bobine,
le bobinage et la connexion des bobines (6ⱼ) au dispositif d'alimentation électrique (7) étant tels que ladite bobine et ladite bobine complémentaire sont diamétralement opposées par rapport à un axe du stator et sont parcourues par les courant (iⱼ) déphasés d'un angle égal à II, et la connexion du stator (2) au dispositif d'alimentation électrique (7) étant effectuée de telle sorte que lorsque l'on se déplace autour de l'axe (X) du stator (2) à partir d'une bobine de référence (6₁), le déphasage entre le courant (i₁) parcourant ladite bobine de référence (6₁) et le courant (iⱼ) propre à chacune des autres bobines (6ⱼ) varie de façon strictement monotone au fur et à mesure du déplacement à partie de ladite bobine de référence (6₁),
le système étant configuré pour charger la batterie à partir du dispositif d'alimentation électrique (7) en utilisant les bobines (6ⱼ) du stator, les courants (iⱼ) ayant circulé dans celles-ci étant redressés avant d'alimenter ensuite la batterie.

12. Système selon la revendication 11, deux bobines successives (6ⱼ) lorsque l'on se déplace autour de l'axe (X) du stator (2) étant décalées angulairement d'un angle mécanique (θ) sensiblement égal à 2.k.Π/N et lesdites bobines successives (6ⱼ) étant connectées au dispositif d'alimentation électrique (7) de manière à être respectivement alimentées par des courants (iⱼ) déphasés entre eux d'un angle électrique sensiblement égal à 2.k.Π/N, k étant un entier relatif.

## Patentansprüche

1. Verfahren zum Laden einer Batterie ab einer elektrischen Versorgungsvorrichtung (7) mit Hilfe einer rotierenden elektrischen Maschine (1), wobei das Verfahren die folgenden Schritte umfasst:
- Verfügen über einen Stator (2) der rotierenden elektrischen Maschine mit einer Karkasse (5), auf der elektrische Leiter derart gewickelt sind, dass sie N Spulen (6ⱼ) bilden, wobei N größer oder gleich vier ist, und
- elektrisches Verbinden der Spulen (6ⱼ) mit der elektrischen Versorgungsvorrichtung (7) derart, dass jede Spule (6ⱼ) von einem eigenen elektrischen Strom (iⱼ) durchflossen wird, der von der elektrischen Versorgungsvorrichtung (7) bereitgestellt wird und einen Eingang für Strom aufweist, der von der elektrischen Versorgungsvorrichtung (7) ausgeht, der mit einer anderen Spule (6ⱼ) des Stators (2) gemeinsam ist, wobei die andere Spule eine komplementäre Spule der Spule bildet, wobei die Wicklung und der Anschluss der Spulen (6ⱼ) an die elektrische Versorgungsvorrichtung (7) derart sind, dass die Spule und die komplementäre Spule in Bezug auf eine Achse des Stators diametral gegenüberliegend sind und von jeweiligen eigenen, in einem Winkel von gleich Π phasenverschobenen Strömen (iⱼ) durchflossen werden, und der Anschluss des Stators (2) an die elektrische Versorgungsvorrichtung (7) derart durchgeführt ist, dass, wenn man sich um die Achse (X) des Stators (2) ab einer Referenzspule (6₁) bewegt, die Phasenverschiebung zwischen dem Strom (i₁), der die Referenzspule durchfließt, und dem eigenen Strom (iⱼ) jeder der anderen Spulen (6ⱼ) schrittweise mit der Bewegung ab der Referenzspule (6₁) streng monoton schwankt, und
- Laden der Batterie bei Verwendung der Spulen (6ⱼ) des Stators, wobei die Ströme (iⱼ), die in diesen zirkulierten, vor dem darauffolgenden Versorgen der Batterie gleichgerichtet werden.

2. Verfahren nach Anspruch 1, wobei die Spulen (6ⱼ) gleichmäßig um die Achse (X) des Stators verteilt sind und wobei die Phasenverschiebung der Ströme (iⱼ) zwischen den aufeinanderfolgenden Spulen (6ⱼ) regelmäßig schwankt.

3. Verfahren nach Anspruch 2, wobei zwei aufeinanderfolgende Spulen (6ⱼ) in einem mechanischen Winkel (θ) von etwa gleich 2.k.Π/N winklig versetzt sind und die zwei aufeinanderfolgenden Spulen (6ⱼ) von Strömen (iⱼ) versorgt werden, die untereinander in einem elektrischen Winkel von etwa gleich 2.k.Π/N phasenverschoben sind, wobei k eine Ganzzahl ist.

4. Verfahren nach einem der Ansprüche 1 bis 3, wobei die von der Versorgungsvorrichtung bereitgestellten Ströme (iⱼ) alle dieselbe Amplitude haben.

5. Verfahren nach einem der vorangehenden Ansprüche, wobei die elektrische Versorgungsvorrichtung einen dreiphasigen Strom bereitstellt.

6. Verfahren nach einem der vorangehenden Ansprüche, wobei eine Spule (6ⱼ) einen ersten Teil der Wicklung einer Phase des Stators bildet, wohingegen die komplementäre Spule (6ⱼ) der Spule einen zweiten Teil bildet, der sich vom ersten Teil der Wicklung der Phase unterscheidet.

7. Verfahren nach Anspruch 6, wobei der Eingang für Strom der Wicklung einer Phase des Stators etwa im Mittelpunkt der Wicklung angeordnet ist.

8. Verfahren nach einem der vorangehenden Ansprüche, wobei die rotierende elektrische Maschine eine Synchronmaschine ist.

9. Verfahren nach einem der vorangehenden Ansprüche, wobei die elektrische Versorgungsvorrichtung ein Stromnetz ist, das an die Spulen (6ⱼ) des Stators ohne Spannungswandler angeschlossen wird.

10. Ladeverfahren nach einem der vorangehenden Ansprüche, wobei die rotierende elektrische Maschine (1) einen Rotor (3) aufweist, der derart konfiguriert ist, dass der Rotor (3) unbewegt ist, wenn die Spulen (6ⱼ) des Stators (2) mit Strom versorgt werden, um die Batterie aufzuladen.

11. System zu Laden einer Batterie, umfassend:
- einen Stator (2) einer rotierenden elektrischen Maschine (1), aufweisend eine Karkasse (5) und auf der Karkasse derart gewickelte elektrische Leiter, dass sie N Spulen (6ⱼ) bilden, wobei N größer oder gleich vier ist, und
- eine elektrische Versorgungsvorrichtung (7), die jeder Spule (6ⱼ) einen eigenen elektrischen Strom (iⱼ) bereitstellt und einen Eingang für Strom, der von der elektrischen Versorgungsvorrichtung (7) ausgeht, der mit einer anderen Spule (6ⱼ) des Stators (2) gemeinsam ist, wobei die andere Spule eine komplementäre Spule der Spule bildet,
wobei die Wicklung und der Anschluss der Spulen (6ⱼ) an die elektrische Versorgungsvorrichtung (7) derart sind, dass die Spule und die komplementäre Spule in Bezug auf eine Achse des Stators diametral gegenüberliegend sind und von in einem Winkel von gleich Π phasenverschobenen Strömen (iⱼ) durchflossen werden, und der Anschluss des Stators (2) an die elektrische Versorgungsvorrichtung (7) derart durchgeführt ist, dass, wenn man sich um die Achse (X) des Stators (2) ab einer Referenzspule (6₁) bewegt, die Phasenverschiebung zwischen dem Strom (i₁), der die Referenzspule durchfließt, und dem eigenen Strom (iⱼ) jeder der anderen Spulen (6ⱼ) schrittweise mit der Bewegung ab der Referenzspule (6₁) streng monoton schwankt,
wobei das System konfiguriert ist, um die Batterie ab der elektrischen Versorgungsvorrichtung (7) bei Verwendung der Spulen (6ⱼ) des Stators zu laden, wobei die Ströme (iⱼ), die in diesen zirkulierten, vor dem darauffolgenden Versorgen der Batterie gleichgerichtet werden.

12. System nach Anspruch 11, wobei zwei aufeinanderfolgende Spulen (6ⱼ), wenn man sich um die Achse (X) des Stators (2) bewegt, in einem mechanischen Winkel (θ) von etwa gleich 2.k.Π/N winklig versetzt sind und die aufeinanderfolgenden Spulen (6ⱼ) an die elektrische Versorgungsvorrichtung (7) derart angeschlossen sind, dass sie jeweils von Strömen (iⱼ) versorgt werden, die untereinander in einem elektrischen Winkel von etwa gleich 2.k.Π/N phasenverschoben sind, wobei k eine Ganzzahl ist.

## Claims

1. A method for charging a battery from a power supply device (7) using an electrical rotating machine (1), said method comprising the following steps:
- having a stator (2) of the electrical rotating machine having a frame (5) on which electrical conductors are coiled so as to form N coils (6j), N being equal to or higher than four and
- electrically connecting the coils (6ⱼ) to the power supply device (7) so that each coil (6ⱼ) is crossed by an own electrical current (iⱼ) delivered by the power supply device (7) and has an input of current from the power supply device (7) which is common with another coil (6ⱼ) of the stator (2), said other coil forming a complementary coil of said coil, coiling and connecting the coils (6ⱼ) to the power supply device (7) being such that said coil and said complementary coil are diametrically opposite with respect to an axis of the stator and are crossed by respective own currents (iⱼ) phase-shifted by an angle equal to Π, and connecting the stator (2) to the power supply device (7) being performed so that when one moves around the axis (X) of the stator (2) from a reference coil (6ₗ), the phase-shift between the current (iₗ) crossing said reference coil and the current (iⱼ) specific to each of the other coils (6ⱼ) varies in a strictly monotonous way as one moves from said reference coil (6ₗ), and
- charging the battery using the coils (6ⱼ) of the stator, the currents (iⱼ) having flowed in the coils being rectified before supplying the battery thereafter.

2. The method according to claim 1, wherein the coils (6ⱼ) are evenly distributed around the axis (X) of the stator and wherein the phase-shift of the currents (iⱼ) regularly varies between the successive coils (6j).

3. The method according to claim 2, wherein two successive coils (6ⱼ) are angularly offset from a mechanical angle (θ) substantially equal to 2.k.Π/N and said two successive coils (6ⱼ) are supplied with current (iⱼ) phase-shifted with respect to each other by an electrical angle substantially equal to 2.k.Π/N, k being a relative integer.

4. The method according to any of claims 1 to 3, wherein the currents (iⱼ) delivered by the supply device (7) all have the same amplitude.

5. The method according to one of the previous claims, wherein the power supply device delivers a three-phase current.

6. The method according to one of the previous claims, wherein a coil (6ⱼ) forms a first part of the winding of a phase of the stator whereas the complementary coil (6ⱼ) of said coil forms a second part distinct from the first part of the winding of said phase.

7. The method according to claim 6, wherein the input of current of the winding of a phase of the stator is disposed substantially at the middle point of said winding.

8. The method according to any of the previous claims, wherein the electrical rotating machine is a synchronous machine.

9. The method according to any of the previous claims, wherein the power supply device is an electrical network that is connected to the coils (6ⱼ) of the stator without a voltage converter.

10. A charging method according to one of the previous claims, wherein the electrical rotating machine (1) includes a rotor (3) configured such that the rotor (3) is stationary when the coils (6ⱼ) of the stator (2) are supplied with current to charge the battery.

11. A system for charging a battery, comprising:
- a stator (2) of an electrical rotating machine (1), including a frame (5) and electrical conductors coiled on the frame so as to form N coils (6j), N being equal to or higher than four, and
- a power supply device (7) delivering to each coil (6ⱼ) an own electrical current (iⱼ) and an input of current from the power supply device (7) which is common with another coil (6ⱼ) of the stator (2), said other coil forming a complementary coil of said coil,
coiling and connecting the coils (6ⱼ) to the power supply device (7) being such that said coil and said complementary coil are diametrically opposite with respect to an axis of the stator and are crossed by currents (iⱼ) phase-shifted by an angle equal to Π, and connecting the stator (2) to the power supply device (7) being performed so that when one moves around the axis (X) of the stator (2) from a reference coil (6ₗ), the phase-shift between the current (iₗ) crossing said reference coil (6ₗ) and the current (iⱼ) specific to each of the other coils (6ⱼ) varies in a strictly monotonous way as one moves from said reference coil (6ₗ),
the system being configured to charge the battery from the power supply device (7) by using the coils (6ⱼ) of the stator, the currents (iⱼ) having flowed in the coils being rectified before supplying the battery thereafter.

12. The system according to claim 11, two successive coils (6ⱼ) when one moves around the axis (X) of the stator (2) being angularly offset from a mechanical angle (θ) substantially equal to 2.k.Π/N and said successive coils (6ⱼ) being connected to the power supply device (7) so as to be respectively supplied with currents (iⱼ) phase-shifted with respect to each other by an electrical angle substantially equal to 2.k.Π/N, k being a relative integer.
